Europäisches Patentamt

European Patent Office

Office européen des brevets

(19)

(11) Publication number: 0 220 466
A1

(12) **EUROPEAN PATENT APPLICATION**

(21) Application number: 86112850.2

(22) Date of filing: 17.09.86

(51) Int. Cl.⁴: H04N 5/781

(30) Priority: 27.09.85 JP 212087/85

(43) Date of publication of application:
06.05.87 Bulletin 87/19

(84) Designated Contracting States:
DE GB NL

(71) Applicant: FUJI PHOTO FILM CO., LTD.
210 Nakanuma Minami Ashigara-shi
Kanagawa 250-01(JP)

(72) Inventor: Kaneko, Kiyotka c/o Fuji Photo Film
Co., Ltd.
26-30, Nishi-Azabu 2-chome
Minato-ku Tokyo(JP)
Inventor: Miyake, Izumi c/o Fuji Photo Film
Co., Ltd.
26-30, Nishi-Azabu 2-chome
Minato-ku Tokyo(JP)
Inventor: Oda, Kazuya c/o Fuji Photo Film Co.,
Ltd.
26-30, Nishi-Azabu 2-chome
Minato-ku Tokyo(JP)

(74) Representative: Patentanwälte Grünecker,
Kinkeldey, Stockmair & Partner
Maximilianstrasse 58
D-8000 München 22(DE)

(54) Apparatus for recording video signals on rotary recording medium with appropriate angular phase in rapid response to start of rotation.

(57) An apparatus for recording video signals on a rotary recording medium (42) includes a rotation control unit (44, 50, 54, 68, 70) responsive to a start instruction for rotating the rotary recording medium (42) and for constantly rotating the medium (42) at a rotary speed within a predetermined range, a recording unit (40,38,34,90) for recording video signals on the rotary recording medium (42) while the medium (42) is rotating, a reference position detecting unit (56,130) for detecting a reference position in the rotation of the recording medium (42) to produce a first signal (PG), a recording control unit (76,80,60,132, 18) for controlling the recording unit (40,38,34,90) at two selectable timings with respect to the first signal (PG) to cause the recording unit (40,38,34,90) to record video signals on the rotary recording medium (42), and a timing select unit (130, 132) for determining whether the first signal (PG) is delayed or advanced with respect to a reference signal (REF) to select one of the two timings. The rotation control unit (44, 50,54,68,70) determines when the rotary speed of the rotary recording medium (42) is within the predetermined range to produce a second signal (75). The timing select unit (130, 132) selects an earlier timing from the two timings when the first signal (PG) is advanced and selects a later timing therefrom when the first signal (PG) is delayed. The recording control unit (44,50,54,68,70), on receiving the first signal (PG) after the second signal (75) is generated, records the video signals at the selected timing.

EP 0 220 466 A1

FIG. 1

## APPARATUS FOR RECORDING VIDEO SIGNALS ON ROTARY RECORDING MEDIUM WITH APPROPRIATE ANGULAR PHASE IN RAPID RESPONSE TO START OF ROTATION

### BACKGROUND OF THE INVENTION

#### Field of the Invention

The present invention relates to an apparatus for recording video signals on a rotary recording medium, and in particular, to an apparatus for recording video signals on a rotary recording medium, for example, applicable to an electronic still camera in which an imaging device such as a solid-state image-pickup device captures an image of an object to produce video signals of the image which are in turn recorded on a rotary recording medium such as a magnetic recording disk, and also applicable to a video signal recording apparatus in which video signals are read from a video memory to be stored on a rotary recording medium.

### DESCRIPTION OF THE PRIOR ART

Recently, there has been developed an electronic still camera configured in combination of an imaging device, such as a solid-state image-pickup device or tube, with a recorder using as a recording medium a low-price magnetic disk with a relatively large recording capacity, where a still picture of an object electronically captured to be recorded on a rotary disk, and the recorded picture is reproduced by using a separate television system, a printer, or the like.

However, recording media used in such apparatuses effect a satisfactory recording only when the rotary media are constantly rotating at a predetermined rotation speed. Among the conventional electronic still camera systems put to practical use, there have been some systems utilizing a magnetic disk having a core or hub provided with a phase generator (PG) so as to be configured to generate a phase pulse each time the magnetic disk makes a complete turn. The phase pulses are used to achieve various control operations in the system. For example, the pulses are applied to implement the rotation servo for a magnetic disk, thereby controlling the rotary speed and phase.

In order to construct a handy apparatus which can be easily handled as a camera, a compact battery system is included for a power supply and the apparatus is advan tageously configured to minimize the unnecessary power consumption of the battery system. To this end, some of the conventional electronic still cameras put to practical use are configured such that the power is turned off whenever the camera is not in use and that a driving motor to drive a rotary recording medium is actuated when a shutter release button is operated. For the control over rotation of this motor, however, the period of the phase pulses is equal to a turn of the disk as described above, that is, the period is relatively long, and hence a longer period of time is necessary for the rotary medium to reach a stable, stationary rotating state, which may therefore lead to a possibility that the best timing or best shutter chance suitable for taking an image of an object may be lost.

To overcome this difficulty, an electronic camera described and shown in the Japanese Patent Laid-Open Publication No. 29096/1985 is configured such that the phase pulses as described above are not applied to the servo control of a magnetic disk driving motor and that a frequency signal which is generated by a frequency generator (FG) linked to the driving motor and which has a period less than that of the phase pulses is used to effect the servo control, so that the rotary medium rapidly reaches a stable, stationary rotation rate. Furthermore, to prevent the best shutter timing to shoot an object from being lost, the system described above is constructed in such a fashion that a shutter release operation is allowed before the disk reaches the stationary rotating state so as to cause an image-pickup device to be subjected to exposure, thereby enabling video signals to be delivered from the imaging device after the stationary rotation speed is reached.

In order to reproduce a picture with an appropriate synchronization soon after a magnetic head sets up a tracking operation in an apparatus for reproducing signals read from such a magnetic disk, a position for initiating an operation to read a field of video signals from each track, namely, the position where a vertical sync signal is located is advantageously included in a predetermined range with respect to a position at which a PG signal is generated. According to the ordinary recording format applied to an electronic still camera, the vertical synchronization signal is recorded at a position within a range of $7H \pm 2H$ advanced from the PG generation position, where H represents a period of horizontal scanning.

Like in the system of above-mentioned Japanese Patent Laid-Open Publication, there is a - scheme in which the PG signal is used to reset the sync signal generator for enabling the magnetic disk driving motor to be actuated in response to a shutter release operation so as to effect a PLL servo by use of an FG signal, so that video signals are developed from the image-pickup device to be stored in a magnetic disk, thereby to achieve reading and recording of video signals in synchronism with the PG signal. In the prior art system using this scheme, however, the allowable range of the stationary rotation of the magnetic disk to which the PLL servo is applied is set to ±2H, for example, and hence the sync signal generator must be reset at a timing with the phase error being nought. However, a considerably long period of time is required for the phase error to be converged to nought.

There has been an alternative scheme to solve this problem in which the lock range of the speed control is set to be shorter than that of the system descirbed above, for example, to ±1H, and the sync signal generator is reset immediately when the rotation speed of the motor enters the lock range. Although the recording format is retained as regulated by 7H ± 2H described above, the lock range is norrowed, and therefore the period of time to be elapsed by the time when the locked state is set up becomes longer. Moreover, there has been a drawback that the sync signal generator cannot be reset at the center, namely, at a position advanced by 7H from the position of the PG signal.

## SUMMARY OF THE INVENTION

It is therefore an object of the present invention to provide an apparatus for recording video signals on a rotary recording medium on which the video signals can rapidly be recorded with an appropriate phase after the rotation of the recording medium is initiated, thereby overcoming above-mentioned problems.

According to the present invention, there is provided an apparatus for recording video signals on a rotary recording medium comprising: rotation control means responsive to an instruction of a start thereof for rotating the rotary recording medium so that a rotation speed of the recording medium is kept constantly within a preset range; recording means for recording video signals on the rotary recording medium in a rotating state, reference position detecting means for detecting a reference position in the rotation of the rotary recording medium so as to generate a first signal; recording control means responsive to the first signal for controlling said recording means at two selectable timings with respect to the first signal to cause said recording means to record video signals on the rotary recording medium; and timing select means for determining whether the first signal is delayed or advanced with respect to a reference signal to select one of said two timings; said rotation control means generating a second signal when the rotation speed of the rotary recording medium is determined to be within the predetermined range; said timing select means selecting an advanced timing from the two timings when the first signal is advanced and selecting a delayed timing therefrom when the first signal is delayed; said recording control means causing the video signals to be recorded at said selected timing when the first signal is received after said second signal is generated.

## BRIEF DESCRIPTION OF THE DRAWINGS

The objects and features of the present invention will become more apparent from the consideration of the following detailed description taken in conjunction with the accompanying drawings in which:

FIG. 1 is a schematic block diagram illustrating an embodiment in which the present invention is applied to an electronic still camera;

FIG. 2 is a circuit block diagram showing a configuration example including a phase detector, a reset circuit, and related circuits of the embodiment of FIG. 1; and

FIGS. 3 and 4 are timing charts depicting signal waveforms appearing in various circuit sections of FIG. 2 wherein FIG. 3 shows a case in which the phase of the magnetic disk rotation is delayed with respect to the reference point and FIG. 4 shows a case in which the phase of the disk rotation is advanced with respect to the reference point.

## DESCRIPTION OF THE PREFERRED EMBODIMENT

Referring to the accompanying drawings, an embodiment of the apparatus for recording video signals on a rotary recording medium according to the present invention will be described in detail.

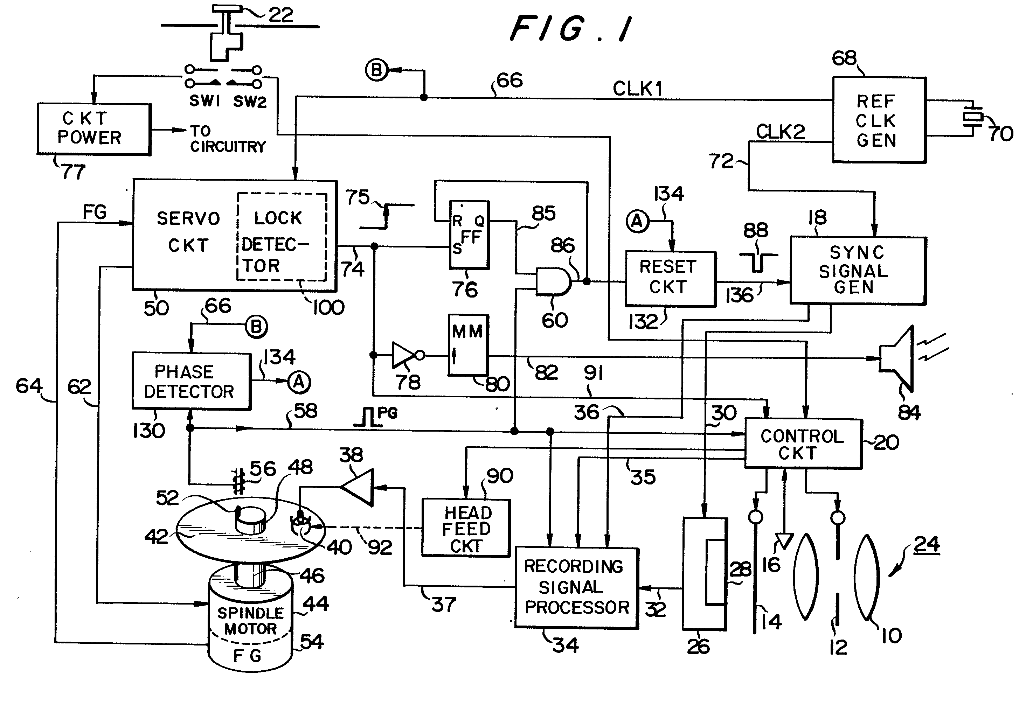

Referring to FIG. 1, an embodiment in which the present invention is applied to an electronic still camera includes an image pickup optical system 24 having an imaging lens system 10 for producing a focused image of an object, an iris diaphragm 12 and an optical shutter 14. The imaging optical system 24 is connected to a control circuit 20. For exposure control, the control circuit 20 functions as a control circuit for controlling the shutter 12 and the diaphragm 12 in response to a photosensor device 16 disposed in a light path of the system 24, a switch $SW_2$ responsive to a shutter release button 22, and a sync signal generating circuit 18.

The shutter release button 22 of this embodiment develops a two-stage stroke motion. In response to the first stage, a switch SW, is closed to cause a circuit power supply 77 to supply power to the various sections of this system. This enables a servo circuit 50 (to be described later) to start a driving motor 44 for rotating a magnetic disk 42 disposed as a rotary recording medium. Moreover, in response to the second stage of the stroke of the button 22, the control circuit 20 operates to effect the shutter release, image pickup, and recording operations. The two-stage stroke motion allows the system to save the unnecessary power consumption from the power supply, such as batteries.

On the focal plane of the optical system 24, there is disposed a solid-state image-pickup device 26 having a two-dimensional photosensitive cell array 28 comprising a CCD, for example. The solid-state image-pickup device 26, in response to driving signals including vertical and horizontal sync signals transmitted over a control line 30 from the sync signal generating circuit 18, stores a video signal associated with the image focused on the imaging plane 28, thereby producing the video signal in the form of a serial signal from an output terminal 32.

The output 32 from the imaging device 26 is connected to a recording signal processing circuit 34. The processing circuit 34 is responsive to driving signals including vertical and horizontal synchronization signals received on a control line 36 from the sync signal generating circuit 18, a phase pulse PG, described later, and a recording indication signal transmitted on a control line 35 from the control circuit 20 so as to conduct a frequency modulation on the video signal delivered from the solid-state imaging device 26 in a raster scanning fashion and to transmit a modulated video signal having a predetermined format from an output terminal 37, which is connected to a magnetic recording head 40 through a recording amplifier 38.

The magnetic recording head 40 is carried by a head feed mechanism conceptually indicated by a dotted line 92, and is a magnetic transducer which is moved by a head feed circuit 90 to a position over a free or unrecorded track of a magnetic disk 42 so as to record video signals thereon. The head feed circuit 90 is controlled by the control circuit 20. The magnetic disk 42 has a core 48 detachably mounted on a rotation shaft 46 which is driven by the driving motor 44, so that the core 48 rotates at a constant turning rate by use of the motor 44, a frequency generator FG 54, and the servo circuit 50.

For the magnetic disk 42, for example, tracks are recorded with a pitch of about 100 μm on a magnetic recording sheet having a diameter of about 47 mm, namely, the track width and the guard band width are about 50-60 μm and 50-40 μm, respectively, and hence 50 tracks may be recorded on the recording sheet. The motor 44 is used to rotate the magnetic disk 42 at a predetermined rotating speed, for example, 3,600 rotations per minute, which enables video signals to be recorded at a field or frame rate.

The core 48 is provided with a phase generator 52 which generates a phase pulse PG with a preset reference rotary phase (angle) for each rotation of the disk 42. In the vicinity of the core 48, there is disposed a sensing coil 56, which is a senser for producing a phase pulse PG on a signal line 58 when the phase generator 52 passes the vicinity of the coil 56. The signal line 58 is connected to the control circuit 20, the signal processing circuit 34, an input of an AND gate 60, and a phase detector circuit 130.

The servo circuit 50 supplies a driving current to a connecting line 62 for driving the motor 44 and includes a phase-locked loop (PLL) which is responsive to a frequency signal FG generated by the frequency generator 54 and supplied to a signal line 64 and to a reference clock CLK 1 generated by a reference clock generator circuit 68 and delivered to a signal line 66 for controlling the rotary speed and rotary phase of the motor 44. For the PLL control circuit, an integrated circuit for motor controlling, for example, Model TC9142P, manufactured by Toshiba, Japan, may advantageously be used.

In this embodiment, the frequency generator 54 is set such that the repetition frequency of the signal FG is substantially equal to a value corresponding to an inverse of an integral multiple of the frequency of the color subcarrier of the video signal, namely, it is sufficiently higher than the frequency of the phase pulse PG, for example, about 20 times the frequency of the PG.

The reference clock generator 68 has a quartz oscillator for generating clock signals with a stable frequency in which the clock is subjected to a division to obtain a reference clock CLK 2 having a frequency of 14.3 MHz, and the CLK 2 is further divided to produce a CKL 1 with a frequency of 3.58 MHz equivalent to that of the color subcarrier. The CKL 2 and CKL 1 are developed from the output ports 72 and 66, respectively.

The servo circuit 50 has a lock detecting circuit 100. The lock detecting circuit 100 estimates the period or the frequency of the frequency signal FG based on the reference clock CLK 1 so as to determine whether or not the rotation speed of the motor 44 is within the predetermined allowable range, namely, whether or not the motor 44 is in its locked state. When the rotation speed of the motor 44 is within the predetermined lock range, an output 74 is set to a high level. The lock range is set, for example, centered on a preset constant rotation speed, 3,600 rpm, to be equivalent to a period of 2H.

The output 74 of the lock detecting circuit 100 is connected to a set input S of a flip-flop 76 and to a monostable multivibrator circuit (MM) 80 through an inverter 78. The monostable circuit 80 has an output 82 connected to an audible signal generator 84 such as a piezoelectric device, and when the output 74 from the lock detecting circuit 100 is changed from its high level to its low level, the generator 84 is energized for a preset period of time, thereby sounding the audible alarm tone. In place of or in addition to this signal generator 84, a visual display unit effecting a visual indication may be disposed.

On the other hand, a lock signal 75 is supplied on a control line 91 to the control circuit 20.

The flip-flop 76 has a Q output 85 connected to another input of the AND gate 60, which has an output 86 connected to a reset input R of the flip-flop 76 and to an input of a reset circuit 132. The reset circuit 132 has another input 134 connected to an output of the phase detector 130 as indicated by a connector symbol A. The reset circuit 132 has an output 136 connected to a reset input of the sync signal generating circuit 18.

The phase detecting circuit 130 is supplied with the clock CLK 1 from the reference clock generator 68 as indicated by a connector symbol B. The phase detector 130 is used to determine whether the phase pulse PG is advanced or delayed in phase with respect to a predetermined reference phase associated with the clock CLK 1, namely, whether the angular phase of the rotating magnetic disk 42 is advanced or delayed, which will be later described in details.

The reset circuit 132 resets the sync signal generating circuit 18 at an appropriate timing. In the embodiment, the reset circuit 132 is so configured as to reset the generator 18 at two points of timing, namely, 5H and 9H after an occurrence of the phase pulse PG. Selection of either of two points of timing is controlled by the phase detecting circuit 130. This will be later described in details.

As can be seen from the configuration, when the output 74 from the lock detecting circuit 100 is set to the high level, that is, when the lock detection signal 75 is produced, the flip-flop 76 is set, which in turn causes the input 85 of the AND gate 60 to be primed. Consequently, a phase pulse PG, when sensed first thereafter by the coil 52, passes through the gate 60 and then is fed to the synchronization signal generating circuit 18 in the form of a reset pulse 88 at a predetermined timing established by the reset circuit 132, thereby resetting the sync signal generating circuit 18.

The sync signal generating circuit 18 generates various periodic control signals based on the reference clock CLK 2 of the clock input 72 to produce the generated signals to the output ports 30 and 36. For example, a 15.7 kHz pixel clock to drive photosensitive cells of the image-pickup device 26 for producing stored electric charges therefrom and sensor driving signals including sync signals are developed from the output port 30, whereas a recording control signal controlling the recording signal processing circuit 34 and sync signals including 60 Hz vertical and horizontal synchronization signals are produced from the output port 36.

The sync signal generating circuit 18 is reset to its initial state by a reset pulse 88. Consequently, if a reset point of time is determined, various control signals can be thereafter delivered with the preset phases at the predetermined intervals. In the embodiment, these control and synchronization signals are fed to the control lines 30 and 36 so that a vertical sync signal appears when a period of time selected by the reset circuit 132, namely, 5H or 9H is elapsed after an occurrence of the phase pulse PG and that a unit, for example, a field (1V) of still picture signals are recorded therefrom on a track of the disk 42. As a consequence, if the rotation speed of the magnetic disk 42 is not undergone a remarkable change, the subsequent vertical sync signals each are generated substantially with a 5H or 9H delay with respect to the phase pulse PG. As the sync signal generating circuit 18, Model MN6064, produced by the Matsushita Electric Industrial Co., Ltd., may be advantageously used, for example.

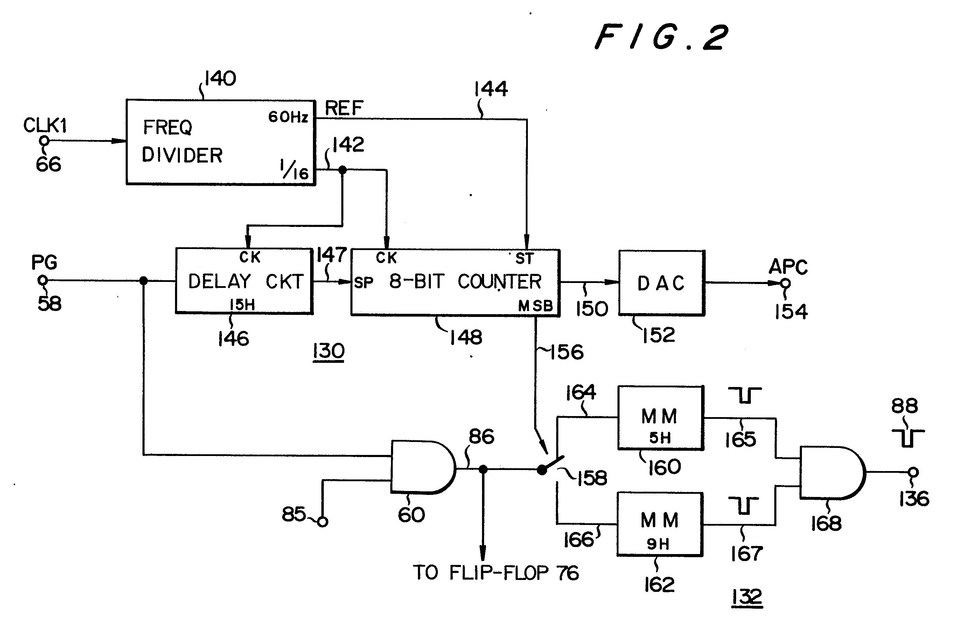

Referring now to FIG. 2, there is shown an example of a circuit configuration comprising a phase detector 130, a reset circuit 132, and circuits related thereto. A reference clock generator 68 has an output 66 connected to a frequency divider 140. On receiving a clock CLK 1 fro the reference signal generator 68, the frequency divider 140 conducts a demultiplication ($^{\times}$ 1/16) on the clock CLK 1 to produce the resultant clock CK from an output 142; and then the CK signal is further divided to generate a reference signal REF having the same frequency as the field frequency, 60Hz, which is developed from an output port 144. The CK signal is transmitted to a delay circuit 146 and a counter 148, whereas the reference signal output 144 is connected to a count start input ST of the counter 148.

The delay circuit 146 is supplied with a phase pulse PG from a signal line 58. In this embodiment, the delay circuit 146 produces the phase pulse PG fro the output port 148 with a predetermined delay of 15H, and includes an 8-bit binary counter which counts the clock signals CK supplied to the input port 142. The delay circuit 146 has an output 147 connected to a count stop input SP of the counter 148.

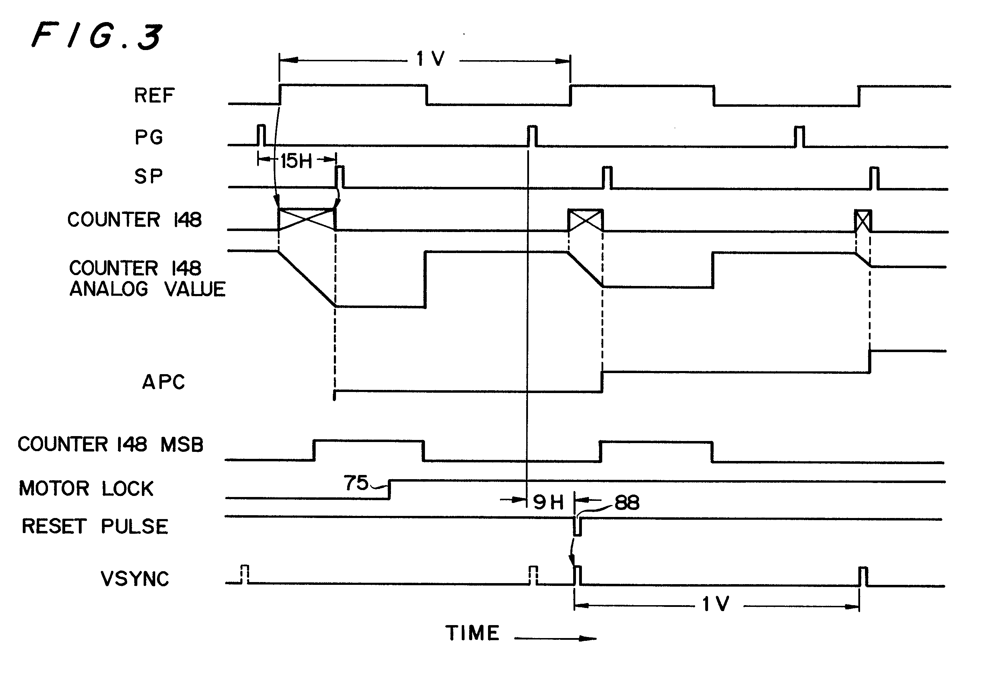

As shown in FIG. 3, the counter 148 starts the operation for counting the clocks CK in response to a positive-going edge of the reference signal REF on the input port ST and stops the counting operation in response to a positive-going edge of the delayed PG pulse received on the input port SP. Consequently, it takes a 15H period for the counter 148 to reach its full count. The counter 148 has an 8-bit output 150 connected to a digital-to-analog converter, DAC 152, which converts the received 8-bit data into an analog signal, APC associated with the 8-bit data. The analog signal, APC is produced from an output terminal 154 and is used by the servo circuit 50 to perform the phase control on the motor 44.

The most-significant bit MSB 156 of a count established in the counter 148 is used to control a changeover switch 158. The switch 158 is a selection circuit which selectively connects an output 86 from the AND gate 60 to either an input 164 of a delay circuit 160 or an input 166 of a delay circuit 162. When the output 156 from the counter 148 is at its high level, namely, when the MSB of the count counted by the counter 148 is "1", the output 86 from the AND gate 60 is connected to the input 166 of the delay circuit 162; whereas when the MSB is "0", the output 86 is connected to the input 164 of the delay circuit 160. In this configuration as described above, a 15H period is required between when the counter 148 starts the counting operation and when the full count is reached; therefore, a period of 7H need be elapsed until the MSB is set to "1".

The delay circuits 160 and 162 develop the delay time substantially equal to 5H and 9H, respectively. Each delay time is associated with an allowable range of ±2H with respect to a point of time delayed by 7H from an occurrence of a phase pulse PG. That is, according to the format standards for a magnetic disk used in a typical electronic still camera, the sync signal generating circuit 18 is reset when a 7H period is elapsed after an occurrence of the phase pulse PG for the magnetic disk 42 constantly turning at a predetermined rotary speed, where the allowable error range is ±2H. The delay circuits 160 and 162 determine the upper and lower limits, respectively of the allowable error range.

The delay circuits 160 and 166 each deliver a pulse having a negative-going edge at the beginning thereof to the output ports 165 and 167, respectively when a predetermined delay time is elapsed after a pulse is received by the input ports, 164 and 168, respectively. These outputs are connected to the inputs of a 2-input AND gate 168 having an output connected to an input port 136 of the sync signal generating circuit 18. Consequently, when the delay circuit 160 or 162 receives a pulse from the output port 86 of the AND gate 60, a reset pulse 88 is delivered from the delay circuit 160 or 162 after the delay time set thereto is elapsed following the input of the pulse 88, which is then fed via the AND gate 168 to the reset input 136 of the sync signal generating circuit 18, thereby resetting the circuit 18.

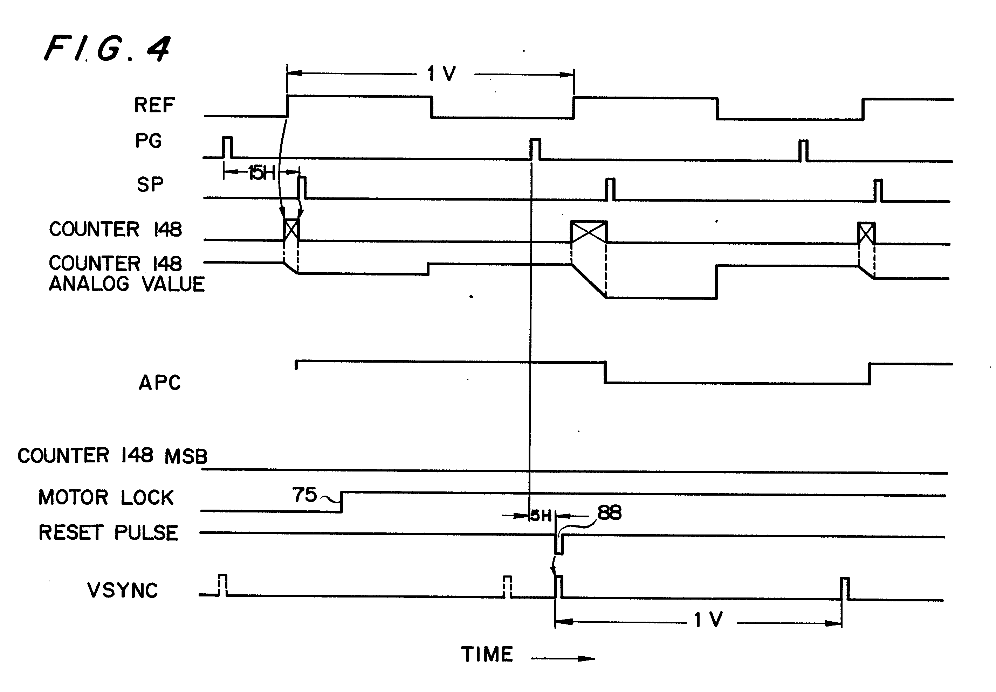

In operation, when the shutter release button 22 is depressed, the switch SW1 is closed, then the motor 44 is driven and the rotation speed of the magnetic disk 42 approaches the predetermined rotary speed. As described in FIG. 3, the counter 148 is enabled in response to the positive-going edge of the reference signal REF and stops the counting operation at the negative-going edge of the phase pulse SP delayed by 15H with respect to the REF signal. As shown in the left-half of FIG. 3, if the negative-going edge of the pulse SP is delayed by at least 7H from that of the reference signal REF, the MSB output 156 from the counter 148 is set to "1", which in turn changes over the switch 158 to a state opposite to the state shown in the figure. As a consequence, the output 86 from the AND gate 60 is delivered to the delay circuit 162. As shown in the right-half of FIG. 4, however, if the positive-going edge of the pulse SP is delayed at most 7H from that of the REF signal, the MSB output 156 from the counter 148 is kept to be "0", and hence the switch 158 is kept remained in the state shown in the figure; consequently, the output 86 from the AND gate 60 is fed to the delay circuit 160.

As shown in FIG. 3, it is assumed that the delay of the pulse SP from the reference signal REF is at least 7H and that the switch 158 is connected to the delay circuit 162. In the case, when the lock detecting circuit 100 detects that the rotating speed of the motor 44 enters the lock range, the detection signal 75 from the lock detecting circuit energizes the input 85 of the gate 60. As depicted in the central portion of FIG. 3, when the next phase pulse PG is generated, the input 58 of the AND gate 60 is also energized, which causes the output 86 therefrom to be significant and hence the delay circuit 162 delivers a negative pulse to the output 166 when a 9H period is elapsed thereafter. The negative pulse passes through the AND gate 168 and is supplied as a reset pulse to the input 136 of the sync signal generating circuit 18, thereby resetting the circuit 18. When the delay of the pulse SP from the reference signal REF is at least 7H as described above, the sync signal generating circuit 18 is reset when a 9H period of time is elapsed after the occurrence of phase pulse PG.

Consequently, the sync signal generating circuit 18 produces thereafter synchronization signals such as a vertical sync signal VSYNC on the signal lines 30 and 36 with a phase difference of 9H with respect to the phase pulse PG.

As shown in FIG. 4, it is assumed that the delay of the pulse SP from the reference signal REF is at most a 7H period and that the switch 158 is connected to the delay circuit 160. In this case, when the lock detecting circuit 100 detects that the rotation speed of the motor 44 enters the lock range, the detection signal 75 therefrom causes the input 85 of the gate 60 to be enabled. When the next phase pulse PG is detected as shown in the central portion of FIG. 4, the input 58 of the AND gate 60 is also enabled, which in turn causes the output 86 therefrom to be significant, and hence the delay circuit 160 produces a negative pulse from the output port 165 when a 5H period is elapsed thereafter. The negative pulse passes the AND gate 168 to reset the sync signal generating circuit 18. As described above, if the delay of the pulse SP from the reference signal REF is at most 7H, the sync signal generating circuit 18 is reset when the 5H period is elapsed after an occurrence of the phase pulse PG. Consequently, the synchronization signal generating circuit 18 develops thereafter synchronization signals including a vertical sync signal VSYNC on the signal lines 30 and 36 with the phase difference 5H with respect to the phase pulse PG.

For the rotary speed control on the driving motor 44 of this embodiment, the lock range of 7H ± 2H is established with respect to the phase pulse PG. In the locked state, according to whether the phase of the magnetic disk 42 is delayed or advanced with respect to the reference signal, the sync signal generating circuit 18 is reset when a period of time of 9H or 5H is elapsed after the phase pulse PG is detected. Consequently, without narrowing the lock range, the sync signal generating circuit 18 can be reset by use of the predetermined phase range for the phase pulse PG, which enables the video signals to be recorded with an appropriate phase, as soon as possible, after the rotation of the magnetic disk 42 is started.

The embodiment has been described only for the explanation of the present invention. The present invention is not limited by the embodiment and it should be appreciated that those skilled in the art can change or modify the embodiment without departing from the scope and spirit of the present invention. For example, although the illustrative embodiment comprises an electronic still camera, the present invention can be advantageously applied to a recording apparatus in which video signal data stored in a video memory is read therefrom and is recorded on a rotary recording medium such as a magnetic or optical recording disk.

According to the present invention as described above, for the control over the rotation rate of the rotary recording medium, a predetermined lock range is applied to the reference phase; and in the locked state, according to the delayed or advanced state of the phase with respect to the reference signal, the operation for resetting the sync signal generating circuit is controlled to adjust the period of time to be elapsed by the time when the synchronization signal is generated for the reference phase. Consequently, without narrowing the lock range, the sync signal generator can be reset within a predetermined range with respect to the reference phase, which enables the video signals to be recorded with an appropriate phase, as soon as possible, after the rotary recording medium starts its rotation.

While the present invention has been described with reference to the particular illustrative embodiment, it is not to be restricted by the embodiment but only by the appended claims. It is to be appreciated that those skilled in the art can change or modify the embodiment without departing from the scope and spirit of the present invention.

## Claims

1. An apparatus for recording video signals on a rotary recording medium (42) comprising:

rotation control means (44,50,54,68,70) responsive to a start instruction for rotating the rotary recording medium (42) and for constantly rotating the rotary recording medium (42) at a rotary speed within a predetermined range;

recording means (40,38,34,90) for recording video signals on the rotating rotary recording medium - (42); and

reference position detecting means (56,130) for detecting a reference position in the rotation of the rotary recording medium (42) to produce a first signal(PG);

CHARACTERIZED BY

recording control means (76,80,60,132,18) for controlling said recording means (40,38,34,90) at two selectable timings with respect to the first signal - (PG) to cause said recording means (40,38,34,90) to record video signals on the rotary recording medium (42); and

timing select means (130,132) for determining whether the first signal (PG) is delayed or advanced with respect to a reference signal (REF) to select either one of said two timings;

said rotation control means (44,50,54,68,70) determining when the rotary speed of the rotary recording medium (42) is within the predetermined range to produce a second signal (75);

said timing select means (130,132) selecting an earlier timing from the two timings when the first signal (PG) is advanced and selecting a later timing therefrom when the first signal (PG) is delayed;

said recording control means (76,80,60,132,18), on receiving the first signal (PG) after the second signal (75) is produced, effecting a recording of the video signals at said selected timing.

2. An apparatus according to claim 1,

CHARACTERIZED IN THAT

said earlier timing is associated with an upper limit of said predetermined range; and

said later timing is associated with a lower limit of said predetermined range.

3. An apparatus according to claim 1,

CHARACTERIZED IN THAT

said apparatus further comprises:

image-pickup means (24,26) for shooting an object to store video signals associated with the object;

said image-pickup means (24,26), in response to the start instruction, supplying the video signals to said recording means (40,38,34,90) at said selected timing.

4. An apparatus according to claim 1,

CHARACTERIZED IN THAT

said rotary recording medium (42) includes a magnetic disk (42);

said recording means (40,38,34,90) recording video signals on the magnetic disk (42).

FIG.1

0 220 466

FIG.2

# FIG.3

REF

PG

SP

COUNTER 148

COUNTER 148
ANALOG VALUE

APC

COUNTER 148 MSB

MOTOR LOCK

RESET PULSE

VSYNC

1 V

15H

75

9 H

88

1 V

TIME ⟶

0 220 466

# F I.G. 4

0 220 466

## DOCUMENTS CONSIDERED TO BE RELEVANT

EP 86112850.2

| Category | Citation of document with indication, where appropriate, of relevant passages | Relevant to claim | CLASSIFICATION OF THE APPLICATION (Int. Cl.4) |
|---|---|---|---|
| A | <u>US - A - 4 123 779</u> (GOLDSCHMIDT)<br>* Abstract; fig. 1; column 3, line 11 - column 4, line 53; claim 1 * | 1,4 | H 04 N 5/781 |
| A | <u>US - A - 3 178 754</u> (GOSHIMA)<br>* Fig. 3; column 5, line 36 - column 8, line 6; claim 6 * | 1,4 | |
| P,A | <u>US - A - 4 546 391</u> (KIMURA)<br>* Fig. 1,3; column 2, line 35 - column 4, line 31 * | 1,4 | |
| P,A | <u>US - A - 4 570 188</u> (ICHIYANAGI)<br>* Abstract; fig. 2; claim 1 * | 1,3,4 | |

TECHNICAL FIELDS SEARCHED (Int. Cl.4)

H 04 N 5/00
G 03 B 19/00

The present search report has been drawn up for all claims

| Place of search | Date of completion of the search | Examiner |
|---|---|---|
| VIENNA | 15-01-1987 | DIMITROW |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82